# EUROPÄISCHE PATENTSCHRIFT

(11) **EP 1 618 252 B1**
(45) Veröffentlichungstag und Bekanntmachung des Hinweises auf die Patenterteilung: **16.08.2006**
(21) Anmeldenummer: 04725026.1
(22) Anmeldetag: 01.04.2004
(51) Int. Cl.: D21H 13/22, D21H 13/26, D21H 13/40, D21H 13/50, D21H 13/46, D21H 13/20

(54) **FASERVLIESMATTE, VERFAHREN ZU DESSEN HERSTELLUNG UND FASERVERBUNDWERKSTOFF**
NON-WOVEN FIBRE MAT, METHOD FOR PRODUCTION THEREOF AND FIBRE COMPOSITE MATERIAL
NATTE EN FIBRES NON TISSEES, SON PROCEDE DE PRODUCTION ET MATERIAU COMPOSITE RENFORCE PAR DES FIBRES

(30) Priorität: 25.04.2003 DE 10318858
(43) Veröffentlichungstag der Anmeldung: 25.01.2006
(73) Patentinhaber: FRENZELIT-WERKE GMBH & CO. KG, 95460 Bad Berneck (DE)
(72) Erfinder: ERB, Wilfried, 89231 Neu-Ulm (DE); ÜBELMESSER, Peter, 95444 Bayreuth (DE)
(74) Vertreter: Pfenning, Meinig & Partner GbR
(86) Internationale Anmeldenummer: PCT/EP2004/003470
(87) Internationale Veröffentlichungsnummer: WO 2004/097111

(56) Entgegenhaltungen:
- EP-A- 1 006 237
- WO-A-02/12619
- WO-A-87/04476
- US-A- 4 294 657

## Beschreibung

Die Erfindung betrifft eine Faservliesmatte als Halbzeug, die einen Hochleistungsthermoplasten als Schmelzfaser und eine Verstärkungsfaser enthält sowie ein Verfahren zur Herstellung einer derartigen Faservliesmatte und Faserverbundwerkstoffe hergestellt aus der Faservliesmatte.

Im Stand der Technik ist die Vliesstoffherstellung mit dem Nassverfahren in von der Papierherstellung abgeleiteten typischen Verfahrensweisen bekannt. In "Vliesstoffe", Viley-VCH, Viley-VCH-Verlag Weinheim 2000 ab Seite 235 ff. ist ein derartiges Verfahren beschrieben. Das Verfahren wird dabei so durchgeführt, dass die Fasern in Wasser dispergiert werden, dass dann eine kontinuierliche Vliesbildung auf einem Siebband durch Filtration erfolgt und anschließend eine Verfestigung, Trocknung und Aufrollung der gebildeten Vliesbahn vorgenommen wird.

Derartige Verfahren werden im Wesentlichen für die Papierherstellung wie z. B. Synthesefaserpapier, Teebeutelpapier, Luftfilterpapier oder auch Zigarettenumhüllungspapiere eingesetzt.

Das Verfahren des Standes der Technik wurde somit nur für die Herstellung von Spezialpapieren oder speziellen technischen Vliesstoffen als Endprodukt angewandt.

Aus dem Stand der Technik sind auch Formteile bekannt, die aus Schmelzfasern und einer Verstärkungs-faser gebildet worden sind. In der EP 0 774 343 A1 ist ein Formteil offenbärt, das aus einer Kernschicht und einer Deckschicht besteht, wobei die Kernschicht aus Schmelzfasern und Verstärkungsfaser gebildet worden ist. Es hat sich jedoch gezeigt, dass dieses Formteil nur für den in der vorstehenden europäischen Anmeldung genannten Einsatzzweck geeignet ist. Das Formteil nach der EP 0 774 343 A1 besitzt nämlich ungenügende Eigenschaften in Bezug auf die Dichte und Festigkeit und ist somit in ihrer Anwendbarkeit beschränkt.

Es ist deshalb die Aufgabe der vorliegenden Erfindung eine neuartige Faservliesmatte bereit zu stellen, die als Halbzeug zur Herstellung von Faserverbundwerkstoffen mit hoher Dichte geeignet ist. Weiterhin ist es eine Aufgabe der vorliegenden Erfindung ein diesbezügliches Verfahren zur Herstellung einer derartigen Faservliesmatte anzugeben. Das Verfahren soll weiterhin eine große Variabilität im Bezug auf die einsetzbaren Komponenten und die damit erzielbaren Eigenschaften aufweisen.

Die Aufgabe wird im Bezug auf die Faservliesmatte durch die kennzeichnenden Merkmale des Anspruches 1, in Bezug auf das Verfahren zur Herstellung der Faservliesmatte durch die Merkmale des Patentanspruches 22 und in Bezugiauf den Faserverbundwerkstoff durch die Merkmale des Patentanspruches 30 gelöst. Die Unteransprüche zeigen vorteilhafte Weiterbildungen auf.

Gemäß der vorliegenden Erfindung wird somit eine Faservliesmatte vorgeschlagen, die mindestens eine erste Faser aus einem Hochleistungsthermoplasten als Schmelzfaser und mindestens eine zweite Faser als Verstärkungsfaser aus einem Hochleistungswerkstoff enthält. Die einzelnen Fasern sind in der Faservliesmatte mittels eines Binders fixiert. Wesentlich beim Gegenstand der vorliegenden Erfindung ist, dass in der Faservliesmatte die Schmelzfasern eine kleinere Faserlänge aufweisen als die Verstärkungsfaser. Die Schmelzfaser ist dabei mit einem Gewichtsanteil von 30 bis 90 Gew.-% und die Verstärkungsfaser mit einem Gewichtsanteil von 10 bis 70 Gew.-% in der Faservliesmatte enthalten.

Dadurch, dass die Faserlänge der Schmelzfaser kleiner ist als diejenige der Verstärkungsfaser, wird eine homogene Vermischung der beiden Faserarten erreicht, so dass dann beim späteren Weiterverarbeiten des Halbzeuges eine einheitliche homogene Verteilung der Verstärkungsfaser in dem Faserverbundwerkstoff erfolgt. Die Faserausrichtung der Fasern in der Schicht kann isotrop und/oder anisotrop sein.

Beim erfindungsgemäßen Verfahren ist die Schmelzfaser 0,1 mm bis 30 mm, bevorzugt 2 mm bis 6 mm und ganz besonders bevorzugt 2,5 mm bis 3 mm. Weiterhin ist darauf zu achten, dass eine möglichst einheitliche Faserlänge vorliegt, so dass auch eine möglichst homogene Verteilung der Schmelzfaser in der Faservliesmatte realisierbar ist. Die Verstärkungsfaser aus dem Hochleistungswerkstoff wird ebenfalls eine Länge von 0,1 mm bis 30 mm besitzen, ist aber, wie durch Patentanspruch 1 definiert wird, jeweils immer größer wie die Schmelzfaser. Geeignete Faserlänge für die Verstärkungsfasern sind 6 mm bis 18 mm, besonders bevorzugt 6 mm bis 12 mm. Auch im Falle der Verstärkungsfaser ist darauf zu achten, dass eine möglichst einheitliche Faserlänge vorliegt.

Aus stofflicher Sicht umfasst die Erfindung im Bezug auf die Schmelzfaser alle im Stand der Technik bekannten Fasern, die aus einem Hochleistungsthermoplasten herstellbar sind. Beispiele für derartige Fasern sind Fasern aus Polyetheretherketon (PEEK), Poly-p-phenylensulfid (PPS), Polyether-imid (PEI) oder Polyethersulfon (PES) und/oder Mischungen hiervon.

Bei den Verstärkungsfasern können solche eingesetzt werden, die aus Hochleistungswerkstoffen herstellbar sind. Beispiele hierfür sind Fasern aus Polybenzoxazol (PBO), Polyimid (PI), Polybenzimidazol (PBI), Metallfasern, Glasfasern, Aramidfasern, Carbonfasern, Keramikfasern, Naturfasern und/oder Mischungen hiervon.

Wie vorstehend bereits erläutert, ist die erfindungsgemäße Faservliesmatte so aufgebaut, dass die einzelnen Fasern mit Hilfe eines Binders untereinander fixiert sind. Die Fasern selbst sind dabei noch so vorhanden, wie sie eingesetzt worden sind und nur lediglich an den Kreuzungspunkten oder an den Berührungsstellen durch den Binder miteinander verbunden. Dieser Aufbau der Faservliesmatte ist wichtig, da für den später herzustellenden Verbundwerkstoff ein Aufspreizen der Verstärkungsfasern und/oder inhomogene Mischung vermieden werden muss.

Der Binder selbst kann dabei ein Binder sein der physikalisch wirkt und/oder durch Verklebung.

Wenn ein physikalisch wirkender Binder eingesetzt wird, erfolgt eine Verbindungswirkung durch Verklammerung/Verhakung der Fasern durch den Binder. Als Binder sind deshalb Fibrillen, Fibride und/oder faserige Binder geeignet.

Der Vorteil eines derartigen Binders besteht darin, dass er nicht zwingend bei der späteren Weiterverarbeitung unter Druck und Temperatur aus dem System im wesentlichen entfernt wird sondern im fertigen Werkstoff erhalten bleibt und so auch die Eigenschaften des Werkstoffes gezielt gesteuert werden können.

Die schmelzklebenden Binder (Thermobondig) sind so gewählt, dass ihr Schmelzpunkt unter dem der Schmelzfaser liegt und dadurch so eine Bindungswirkung entsteht.

Bei den Bindern können gemäß der vorliegenden Erfindung solche eingesetzt werden auf Basis von Polyvinylalkohol (PVA), Polyvinylacetat (PVAC), Ethylenvinylacetat (EVA), Polyacrylat, Polyurethan (PUR), Harze, insbesondere z. B. Melaminharz oder Phenolharz, Polyolefine wie Polyethylen (PE), Polypropylen (PP), aromatische Polyamide (Aramide) und Copolymere hiervon.

Der Binder kann eine Dispersion sein oder die Form von Fibrillen, Fibriden oder faserartigen Charakter aufweisen. Im Falle eines derartigen Binders kann die Geometrie hinsichtlich des Längen-Breiten-Höhenverhältnisses für jeden einzelnen Parameter im Verhältnis zu einem anderen im Bereich von 1:1 bis 1:100.000 variieren.

Die erfindungsgemäße Faservliesmatte kann selbstverständlich auch noch Additive enthalten. Solche Additive können eingesetzt werden, um die Eigenschaften der Faservliesmatte und somit auch nachfolgend des mit der Faservliesmatte hergestellten Faserverbundwerkstoffes zu beeinflussen. Gemäß der vorliegenden Erfindung können deshalb Additive eingesetzt werden, die Eigenschaften wie elektrische Leitfähigkeit, Wärmeleitfähigkeit, Reibungsverhalten, Temperaturbeständigkeit, Schlagzähigkeit, Festigkeit oder die Abrasionsbeständigkeit beeinflussen. Derartige Additive können z. B. in Form von Fasern, Fibrillen, Fibride oder Pulpen eingesetzt werden. Die Additive können PTFE-Fasern oder Pulver, PI-Fasern, Aramidfasern, Carbonfasern oder metallische und/oder keramische wie auch organische Pulver sein. Besonders geeignet sind nanoskalige C-Fasern. Die Faservliesmatte kann deshalb auch als Funktionsschicht fungieren.

Wesentlich ist nun, dass die erfindungsgemäße Faservliesmatte ein sehr geringes Flächengewicht besitzt. Darüber hinaus kennzeichnend ist die hohe Gleichmäßigkeit des Flächengebildes in Längs- und Querrichtung hinsichtlich der Dicke. Die Faservliesmatte kann je nach eingesetzten Verstärkungsfasern und Schmelzfasern und dessen Gewichtsanteile ein Flächengewicht von 8 bis 400 g/m², bevorzugt 50 bis 150 g/m² und eine Dichte von 30 bis 500 kg/m³, bevorzugt 100 bis 200 kg/m³ aufweisen. Die Faservliesmatte nach der Erfindung ist bevorzugt 0,1 mm bis 4 mm, besonders bevorzugt 0,5 mm bis 2 mm dick. Das geringe Flächengewicht ermöglicht, dass beim späteren Verpressungsvorgang sehr dünne Formteile hergestellt werden können.

Die Faservliesmatte nach der Erfindung kann weiterhin noch so aufgebaut sein, dass auf mindestens einer Außenseite der Faservliesmatte ein flächiges Substrat aufgebracht ist. Dies bringt den Vorteil mit sich, dass dieses flächige Substrat z. B. auch als Funktionsschicht ausgebildet sein kann und dann im weiteren Verarbeitungsgang, d.h. wenn das Halbzeug zu einem Endprodukt verarbeitet wird, diese Funktionsschicht noch bestimmte Funktionen, wie eine Leitfähigkeit oder auch eine spezielle Klebefunktion, übernimmt. Das flächige Substrat kann dabei in Form eines Gewebes, Geleges, Papiers oder Vlieses ausgebildet sein. Eine weitere Alternative der erfindungsgemäßen Faservliesmatte sieht vor, dass mindestens zwei Faservliesmatten übereinander angeordnet sind, d.h. dass als flächiges Substrat eine weitere Faservliesmatte dient,'so dass dann ein Verbund aus zwei Faservliesmatten vorliegt.

Die Erfindung betrifft weiterhin ein Verfahren zur Herstellung einer Faservliesmatte wie vorstehend beschrieben. Das erfindungsgemäße Verfahren sieht vor, dass die Schmelzfaser um die Verstärkungsfaser in einem Dispergiermittel, bevorzugt Wasser, dispergiert werden und dass dann eine kontinuierliche Vliesbildung auf einem Siebband durch Filtration erfolgt und anschließend eine Verfestigung und Trocknung des Vlieses erfolgt. Das Bindemittel kann dabei während des Dispergierschrittes und/oder während der Vliesbildung zugesetzt werden. Wie an und für sich aus dem Stand der Technik schon bekannt, wird auch beim erfindungsgemäßen Verfahren mit einem schräg laufenden Sieb gearbeitet.

Bevorzugt ist es weiterhin, wenn das Bindemittel in Form einer Dispersion zugegeben wird. Die Zugabe des Bindemittels kann dabei sowohl während des Dispergierschrittes wie auch während der Vliesbildung erfolgen.

Gleichfalls ist es für die Additive möglich, diese während des Dispergierschrittes oder während der Vliesbildung zuzusetzen.

Ein Vorteil des erfindungsgemäßen Verfahrens ist es, dass das Flächengewicht, die Dichte und die Dicke des Vlieses durch die stoffliche Zusammensetzung der Dispersion und/oder die Zulaufgeschwindigkeit der Dispersion auf das Schrägsieb und/oder dessen Transportgeschwindigkeit gesteuert werden kann. Dadurch ist es nun möglich, Faservliesmatten mit einem wie vorstehend beschriebenen Flächengewicht von 8 bis 400 g/m² und einer Dichte von 30 bis 500 kg/m³ herzustellen. Wesentlich ist es, dass beim erfindungsgemäßen Verfahren eine homogene Mischung in Form einer Dispersion der Edukte zur Verfügung gestellt wird, so dass dann beim Auflauf dieser Dispersion auf das Sieb eine homogene Verteilung der Faserarten Schmelzfaser und Verstärkungsfaser erreicht wird. Beim erfindungsgemäßen Verfahren war es besonders überraschend, dass die mit dem vorstehend beschriebenen Fasern hergestellte Faservliesmatte eine ausgezeichnete Stabilität aufweist. Dadurch ist es nun möglich, diese Faservliesmatte in weiteren Verarbeitungsschritten zu einem Endprodukt zu verarbeiten.

Zur Herstellung einer Faservliesmatte, die auf mindestens einer Außenseite noch ein flächiges Substrat aufweist, ist es vorgesehen, dass die Vliesbildung mit auf dem Schrägsieb aufgelegten Flächengebilden erfolgt. Diese Flächengebilde können ein Gelege, Gewebe oder ein Vliesstoff sein.

Die Erfindung betrifft weiterhin noch ein Faserverbundwerkstoff gemäß den Merkmalen.des Patentanspruches 30.

Der Faserverbundwerkstoff der vorliegenden Erfindung zeichnet sich besonders dadurch aus, dass die Verstärkungsfaser mit einem Gewichtsanteil von 30 bis 90 Gew.-% bezogen auf den Gewichtsanteil des Verbundwerkstoffes homogen im Werkstoff verteilt ist. Die Ausrichtung der Faser in der Matrix des Faserverbundwerkstoffes kann isotrop und/oder anisotrop sein. Die Faserlänge der Fasern in dem Faserverbundwerkstoff beträgt dabei 0,1 mm bis 30 mm, bevorzugt 6 mm bis 18 mm, ganz besonders bevorzugt 6 mm bis 12 mm. Die Fasern' sind dabei ausgewählt aus Fasern aus Hochleistungswerkstoffen, wie sie im Stand der Technik bekannt sind. Hierzu wird auf die Beschreibung der Faservliesmatte Bezug genommen.

Die Matrix des erfindungsgemäßen Faserverbundwerkstoffes ist bevorzugt aus einem Hochleistungsthermoplasten gebildet. Aus stofflicher Sicht können die Hochleistungsthermoplaste eingesetzt werden, wie sie ebenfalls vorstehend bereits bei der Faservliesmatte beschrieben worden sind.

Wesentlich ist nun, dass der Faserverbundwerkstoff nach der vorliegenden Erfindung eine Dichte aufweist, die zwischen 0,25 und 6 g/cm³ liegt. Es hat sich gezeigt, dass die Dichte, die bei den erfindungsgemäßen Faserverbundwerkstoffen realisierbar ist, zwischen 30 und 100 % der maximal erreichbaren Dichte beträgt, die sich aus der Dichte der einzelnen Ausgangsstoffe, d.h. der Verstärkungsfasern und der Matrix, errechnet. Dadurch steht nun erstmalig ein Hochleistungswerkstoff zur Verfügung, der in seinen Eigenschaften vergleichbar ist wie metallische Werkstoffe. Der Werkstoff könnte somit auch als Kunststoffblech bezeichnet werden.

Der Faserverbundwerkstoff nach der vorliegenden Erfindung liegt bevorzugt in Form eines flächigen Gebildes vor, kann jedoch selbstverständlich dann zu dreidimensionalen Gebilden verformt werden. Die Dicke des Faserverbundwerkstoffes in Form des flächigen Gebildes beträgt bevorzugt zwischen 0,01 bis 0,2 mm.

Der Faserverbundwerkstoff nach der Erfindung kann weiterhin noch eine Funktionsschicht aufweisen. Diese Funktionsschicht ist mindestens auf einer Seite des erfindungsgemäßen Faserverbundwerkstoffes vorhanden.

Der erfindungsgemäße Faserverbundwerkstoff ist bevorzugt herstellbar durch Verpressung mindestens einer Faservliesmatte nach mindestens einem der Ansprüche 1 bis 20 in einem beheizten Werkzeug. Geeignete Drücke hierfür sind 0,05-15 N/mm². Je nach angewendetem Druck und verwendeten Verstärkungsfasern kann die Dichte des herzustellenden Faserverbundwerkstoffes eingestellt werden.

Die Erfindung wird nachfolgend anhand von Herstellungsbeispielen und Figuren näher beschrieben.
- Fig. 1: zeigt dabei die Prinzipdarstellung einer Vorrichtung zur Herstellung der Faservliesmatte;
- Fig. 2 und 3: zeigen elektronenmikroskopische Aufnahmen eines erfindungsgemäßen Faserverbundwerkstoffes.

### Beispiel 1: Herstellungsbeispiel einer Faservliesmatte

Unter VP00054 wurde beispielhaft ein Faservlies erzeugt.

| | |
|---|---|
| PPS Schnittlänge 3 mm | 81 Gew.-% |
| Carbonfaser Schnittlänge 6mm darauf bezogen: | 19 Gew.-% |
| Bindefaser PVA 4 mm | 10 Gew.-% |
| Flächengewicht: | 128 g/m² |
| Dicke: | 0,95 mm |
| Dichte': 0,135 g/cm³ | |

### Beispiel 2: Herstellungsbeispiel für Faserverbundwerkstoff

Aus diesem Vlies wurden konsolidierte Faserverbundwerkstoffe erzeugt:

| | |
|---|---|
| einlagige Verpressung Verpressungstemperatur: | 350 °C |
| Flächenpressung: | 3,3 N/mm² |
| Dicke: | 110 µm |
| Dichte: | 1,17 g/cm³ |

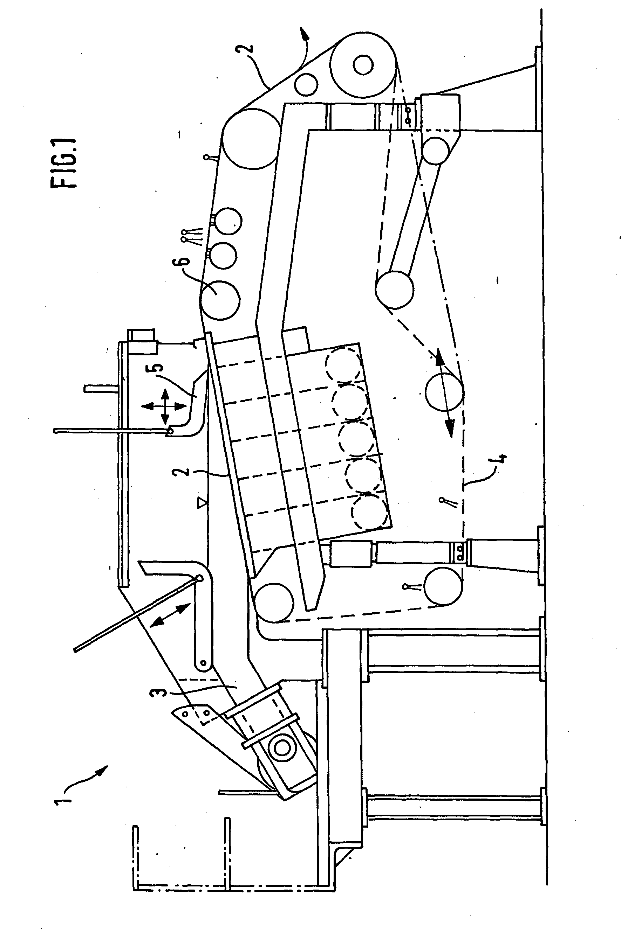

Fig. 1 zeigt die Prizipdarstellung einer Schrägsiebanlage, wie sie für die Herstellung der erfindungsgemäßen Faservliesmatte angewendet worden ist. Die Vorrichtung 1 besteht dabei aus einem schräg laufenden Sieb 2 sowie einer horizontalen Zuführungseinrichtung 3 mit der die Dispersion der Schmelzfasern und der Verstärkungsfasern auf das schräg laufende Sieb 2 zugeführt wird. Das schräg laufende Sieb 2 ist dabei so ausgestaltet, dass eine Entwässerung möglich ist. Hierfür ist ein entsprechender Auffangbehälter 4 vorgesehen. Zur kontrollierten Dickeneinstellung ist eine entsprechende Vorrichtung 5 angeordnet, die einstellbar ist, um die Dicke des Faservlieses zu realisieren. Die Dispersion aus den Fasern wird, wie vorstehend dargelegt, über den horizontalen Kanal 3 auf ein umlaufendes Band geführt, das über Rollen 6 gelenkt ist. Nach der Beaufschlagung mit der Dispersion wird das Faservlies über eine Trocknungseinrichtung 7 geführt, um die Verbindung der einzelnen Fasern mit dem Bindemittel sicherzustellen. Die so hergestellte Faservliesmatte wird dann entnommen.

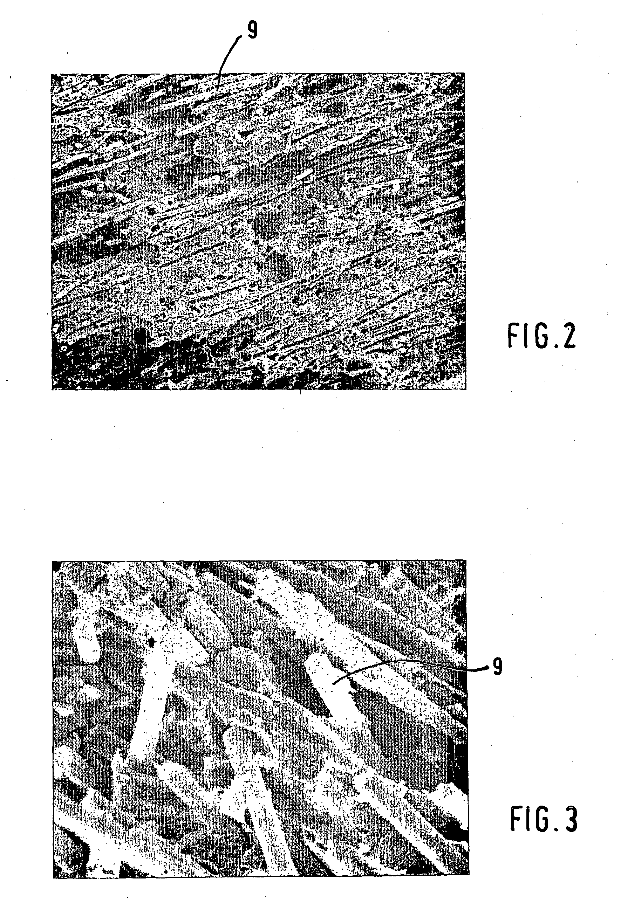

Fig. 2 und 3 zeigen elektronenmikroskopische Aufnahmen eines erfindungsgemäßen Faserverbundwerkstoffes. Der Faserverbundwerkstoff nach Fig. 2 und 3 ist ein Verbundwerkstoff der hergestellt worden ist aus einer Faservliesmatte bestehend aus Glasfasern als Verstärkungsfasern und PPS-Fasern als Schmelzfasern. Wie die elektronenmikroskopischen Aufnahmen der Fig. 2 und 3 zeigen ist die Verstärkungsfaser 9 homogen in der Thermoplastmatrix verteilt. Aus Fig. 2 und 3 geht auch hervor, dass die entsprechenden Fasern nahezu unverändert vorliegen, insbesondere nicht eingekürzt sind. Dies trägt entscheidend zur Steigerung des EModuls und insbesondere zu Zugfestigkeit des Werkstoffes im vergleich zu reinen unverstärkten Thermoplastfolien bei.

## Patentansprüche

1. Faservliesmatte als Halbzeug enthaltend mindestens eine erste Faser aus einem Hochleistungsthermoplasten als Schmelzfaser mit einer Faserlänge von 0,1 bis 30 mm mit einem Gewichtsanteil von 30 bis 90 %, und mindestens eine zweite Verstärkungsfaser aus einem Hochleistungswerkstoff mit einer Faserlänge von 0,1 bis 30 mm dessen Temperaturstabilität größer ist als die der Schmelzfaser, mit einem Gewichtsanteil von 10 bis 70 %, wobei die Schmultzfazer und die mindestens eine Verstärkungsfaser nur lediglich an den Kreuzungspunkten oder Berührungspunks mit 1 bis 10 Gewichtsprozent eines Binders verbunden sind und wobei die Gewichtsanteile auf die gesamte Formulierung der Faservliesmatte bezogen sind, mit der Maßgabe, dass die Faserlänge der Schmelzfaser kleiner ist als der Verstärkungsfaser und dass die Faservliesmatte ein Flächengewicht von 8 bis 400 g/m² aufweist.

2. Faservliesmatte nach Anspruch 1
**dadurch gekennzeichnet, dass** die Länge der Schmelzfaser 2 bis 6 mm ist.

3. Faservliesmatte nach Anspruch 2,
**dadurch gekennzeichnet, dass** die Länge der Schmelzfaser 2,5 mm bis 3,5 mm ist.

4. Faservliesmatte nach Anspruch 1,
**dadurch gekennzeichnet, dass** die Länge der Verstärkungsfaser 6 mm bis 18 mm ist.

5. Faservliesmatte nach Anspruch 4,
**dadurch gekennzeichnet, dass** die Länge der Verstärkungsfaser 6 mm bis 12 mm ist.

6. Faservliesmatte nach einem der Ansprüche 1 bis 5,
**dadurch gekennzeichnet, dass** die Schmelzfaser ausgewählt ist aus Polyetheretherketon, Poly-p-phenylensulfid, Polyether-imid und/oder Polyethersulfon und/oder Mischungen hiervon.

7. Faservliesmatte nach einem der Ansprüche 1 bis 6
**dadurch gekennzeichnet, dass** die Verstärkungsfaser ausgewählt ist aus Glasfasern, Aramidfasern, Carbonfasern, Keramikfasern, Metallfasern, Polyimidfasern, Polybenzoxazolfasern und Naturfasern und/oder Mischungen hiervon.

8. Faservliesmatte nach einem der Ansprüche 1 bis 7,
**dadurch gekennzeichnet, dass** der Binder ausgewählt ist aus Verbindungen die auf Basis von Polyacrylat, Polyvinylacetat, Polyvinylalkohol, Polyurethan, Harzen, Polyolefinen, aromatischen Polyamiden oder Copolymeren hiervon oder Mischungen hiervon, aufgebaut sind.

9. Faservliesmatte nach Anspruch 8,
**dadurch gekennzeichnet, dass** der Binder ausgewählt ist aus Fibrillen, Fibride und/oder faserigen Bindern und die Geometrie hinsichtlich des Längen-Breiten-Höhen-Verhältnisses für jeden einzelnen Parameter im Verhältnis zu einem anderen im Bereich von 1:1 bis 1:100.000 variiert.

10. Faservliesmatte nach einem der Ansprüche 1 bis 9
**dadurch gekennzeichnet, dass** sie zusätzlich Additive enthält.

11. Faservliesmatte nach Anspruch 10,
**dadurch gekennzeichnet, dass** die Additive ausgewählt sind aus tribologischen Zusätzen, Additiven aus Fasern, Fibrillen, Fibride, Pulpe, metallischen oder keramischen Pulver oder organische Pulver und/oder Mischungen hiervon.

12. Faservliesmatte nach Anspruch 11,
**dadurch gekennzeichnet, dass** als Additive PTFE-Fasern oder Pulver, PI-Fasern, Aramidfasern, Carbonfasern oder Pulver und/oder Metallpulver sind.

13. Faservliesmatte nach mindestens einem der Ansprüche 1 bis 12,
**dadurch gekennzeichnet, dass** die Faservliesmatte eine Dichte von 30 bis 500 kg/m³ aufweist.

14. Faservliesmatte nach einem der Ansprüche 1 bis 13,
**dadurch gekennzeichnet, dass** sie eine Dicke von 0,1 mm bis 4 mm auf-weis-t .

15. Faservliesmatte nach mindestens einem der Ansprüche 1 bis 14,
**dadurch gekennzeichnet, dass** auf mindestens einer Außenseite der Faservliesmatte ein flächiges Substrat aufgebracht ist.

16. Faservliesmatte nach Anspruch 15,
**dadurch gekennzeichnet, dass** ein bahnförmiges Gebilde in Form eines Gewebes, Geleges, Papiers oder Vlieses aufgebracht ist.

17. Fäservliesmatte nach mindestens einem der Ansprüche 1 bis 16,
**dadurch gekennzeichnet, dass** sie ein Verbund von mindestens zwei Faservliesmatten ist.

18. Faservliesmatte nach einem der Ansprüche 1 bis 17,
**dadurch gekennzeichnet, dass** die Schmelzfaser und Verstärkungsfaser homogen verteilt in der Matte vorliegen.

19. Faservliesmatte nach mindestens einem der Ansprüche 1 bis 18,
**dadurch gekennzeichnet, dass** die Schmelzfasern und verstärkungsfasern inhomogen verteilt in der Matte vorliegen.

20. Verfahren zur Herstellung einer Faservliesmatte nach mindestens einem der Ansprüche 1 bis 19,
**dadurch gekennzeichnet**e dass die Schmelzfaser und die Verstärkungsfaser in einem Dispersionsmittel, bevorzugt Wasser, dispergiert werden, dass dann eine kontinuierliche Vliesbildung auf einem schräg aufenden Siebband durch Filtration erfolgt und anschließend eine Verfestigung und Trocknung der Vliesbahn durchgeführt wird, wobei das Bindemittel während des Dispergierschrittes und/oder während der Vliesbildung zugesetzt wird.

21. Verfahren nach Anspruch 20,
**dadurch gekennzeichnet, dass** das Bindemittel in Form von Fasern in einer Dispersion zugegeben wird.

22. Verfahren nach mindestens einem der Ansprüche 20 oder 21,
**dadurch gekennzeichnet, dass** die Additive in Form von Fasern oder Pulvern eingebracht werden.

23. Verfahren nach Anspruch 22,
**dadurch gekennzeichnet, dass** die Additive während des Dispergierschrittes und/oder während der Vliesbildung eingebracht bzw. aufgestreut werden.

24. Verfahren nach mindestens einem der Ansprüche 20 bis 23,
**dadurch gekennzeichnet, dass** das Flächengewicht und die Dicke des Vlieses durch die stoffliche Zusammensetzung der Dispersion und/oder die Zulaufgeschwindigkeit der Dispersion auf das Schrägsieb und/oder dessen Transportgeschwindigkeit gesteuert wird.

25. Verfahren nach mindestens einem der Ansprüche 20 bis 24,
**dadurch gekennzeichnet, dass** die Vliesbildung mit auf dem Schrägsieb aufgelegten Flächengebilde erfolgt.

26. Verfahren nach Anspruch 25,
**dadurch gekennzeichnet, dass** als Flächengebilde ein Gelege, Gewebe oder ein Vliesstoff verwendet wird.

27. Faserverbundwerkstoff hergestellt aus mindestens einer Faservliesmatte nach Anspruch 1,
**dadurch gekennzeichnet, dass** er 30 bis 90 Gew.-% einer Verstärkungsfaser ausgewählt aus Hochleistungswerkstoffen mit einer Faserlänge von 0,1 mm bis 30 mm enthält und dass die Verstärkungsfaser anisotrop in der Matrix des Hochleistungswerkstoffes ausgerichtet ist, wobei der Faserverbundwerkstoff eine Dichte aufweist von 0,25 g/cm³ bis 6 g/cm³.

28. Faserverbundwerkstoff nach Anspruch 27,
**dadurch gekennzeichnet, dass** die Verstärkungsfaser ausgewählt ist aus Glasfasern, Aramidfasern, Carbonfasern, Keramikfasern, oder Mischungen hiervon.

29. Faserverbundwerktoff nach Anspruch 27 order 28, **dadurch gekennzeichnet, dass** die Matrix aus einem Hochleistungsthermoplasten besteht, ausgewählt aus Polyetheretherketon, Poly-p-phenylensulfid, Polyether-imid und/oder Polyethersulfon.

30. Faserverbundwerkstoff nach Anspruch 27,
**dadurch gekennzeichnet, dass** die Dichte des Faserverbundwerkstoffes 30 bis 100 % der maximal erreichbaren Dichte ist, die sich aus den Dichten des Matrixmaterials und der Verstärkungsfaser errechnet.

31. Faserverbundwerkstoff nach einem der Ansprüche 27 bis 30,
**dadurch gekennzeichnet, dass** der Faserverbundwerkstoff auf mindestens einer Seite des Werkstoffes eine Funktionsschicht aufweist.

32. Faserverbundwerkstoff nach einem der Absprüche 27 bis 31
**dadurch gekennzeichnet, dass** er eine Dicke von 0,01 mm bis 1,6 mm aufweist.

33. Faserverbundwerkstoff nach einem der Ansprüche 27 bis 32,
herstellbar durch Verpressung mindestens zweier Faservliesmatten nach mindestens einem der Ansprüche 1 bis 20 in einem beheizten Werkzeug.

34. Faserverbundwerkstoff nach Anspruch 33,
**dadurch gekennzeichnet, dass** die Verpressung bei einem Druck von 0,05-15 N/mm² hergestellt worden ist.

## Claims

1. Non-woven fibre mat in the form of a semi-finished product, containing at least one first fibre made of a high-performance thermoplastic as a fusible fibre with a fibre length of between 0.1 and 30 mm and a proportion by weight of between 30 and 90 %, and at least one second reinforcing fibre made of a high-performance material with a fibre length of between 0.1 and 30 mm, the temperature stability of which is greater than that of the fusible fibre, with a proportion by weight of between 10 and 70 %, the fusible fibre and the at least one reinforcing fibre being joined only at their crossing points or contact points with between 1 and 10 per cent by weight of a binder and, the proportions by weight being relative to the entire formulation of the non-woven fibre mat, subject to the proviso that the fibre length of the fusible fibre is smaller than of the reinforcing fibre, and that the non-woven fibre mat has a weight of between 8 and 400 g/m².

2. Non-woven fibre mat as in claim 1,
**characterised in that**
the length of the fusible fibre is between 2 mm and 6 mm.

3. Non-woven fibre mat as in claim 2,
**characterised in that**
the length of the fusible fibre is between 2.5 mm and 3.5 mm.

4. Non-woven fibre mat as in claim 1,
**characterised in that**
the length of the reinforcing fibre is between 6 mm and 18 mm.

5. Non-woven fibre mat as in claim 4,
**characterised in that**
the length of the reinforcing fibre is between 6 mm and 12 mm.

6. Non-woven fibre mat as in one of claims 1 to 5,
**characterised in that**
the fusible fibre is selected from polyetherether ketone, poly-p-phenylene sulphide, polyether imide and / or polyether sulphone and / or mixtures thereof.

7. Non-woven fibre mat as in one of claims 1 to 6,
**characterised in that**
the reinforcing fibre is selected from glass fibres, aramide fibres, carbon fibres, ceramic fibres, metal fibres, polyimide fibres, polybenzoxazole fibres and natural fibres and / or mixtures thereof.

8. Non-woven fibre mat as in one of claims 1 to 7,
**characterised in that**
the binder is selected from compounds made up on the basis of polyacrylate, polyvinyl acetate, polyvinyl alcohol, polyurethane, resins, polyolefins, aromatic polyamides or copolymers thereof or mixtures thereof.

9. Non-woven fibre mat as in claim 8,
**characterised in that**
the binder is selected from fibrils, fibrets and / or fibrous binders, and the geometry in respect of the length-width-height ratio varies within the range of 1:1 and 1:100,000 for each individual parameter in relation to another.

10. Non-woven fibre mat as in one of claims 1 to 9,
**characterised in that**
it also contains additives.

11. Non-woven fibre mat as in claim 10,
**characterised in that**
the additives are selected from tribological supplements, additives made of fibres, fibrils, fibrets, pulp, metallic or ceramic powder or organic powder and / or mixtures thereof.

12. Non-woven fibre mat as in claim 11,
**characterised in that**
the additives are PTFE fibres or powder, PI fibres, aramide fibres, carbon fibres or powder and / or metal powder.

13. Non-woven fibre mat as.in at least one of claims 1 to 12,
**characterised in that**
the non-woven fibre mat has a density of between 30 and 500 kg/m³.

14. Non-woven fibre mat as in one of claims 1 to 13,
**characterised in that**
it has a thickness of between 0.1 mm and 4 mm.

15. Non-woven fibre mat as in at least one of claims 1 to 14,
**characterised in that**
a flat substrate is applied to at least one outer face of the non-woven fibre mat.

16. Non-woven fibre mat as in claim 15,
**characterised in that**
a web-like structure in the form of a woven fabric, interlay, paper or non-woven fabric is applied.

17. Non-woven fibre mat as in at least one of claims 1 to 16,
**characterised in that**
it is a composite of at least two non-woven fibre mats.

18. Non-woven fibre mat as in one of claims 1 to 17,
**characterised in that**
the fusible fibre and the reinforcing fibre are distributed homogeneously throughout the mat.

19. Non-woven fibre mat as in at least one of claims 1 to 18,
**characterised in that**
the fusible fibres and reinforcing fibres are distributed non-homogeneously throughout the mat.

20. Method of producing a non-woven fibre mat in accordance with at least one of claims 1 to 19,
**characterised in that**
the fusible fibre and the reinforcing fibre are dispersed in a dispersion agent, preferably water, that a continuous non-woven fabric formation then takes place by filtration on an angled screen belt, and finally a bonding and drying process is carried out on the non-woven web, the binding agent being added during the dispersion stage and / or during the formation of the non-woven fabric.

21. Method as in claim 20,
**characterised in that**
the binding agent is added in the form of fibres in a dispersion.

22. Method as in at least one of claims 20 or 21,
**characterised in that**
the additives are introduced in the form of fibres or powders.

23. Method as in claim 22,
**characterised in that**
the additives are introduced or sprinkled on during the dispersion stage and / or during the formation of the non-woven fabric.

24. Method as in at least one of claims 20 to 23,
**characterised in that**
the weight and thickness of the non-woven fabric are controlled by the material composition of the dispersion and / or the admission speed of the dispersion on to the angled screen and / or the speed of movement of the latter.

25. Method as in at least one of claims 20 to 24,
**characterised in that**
the formation of the non-woven fabric takes place with a fabric placed on the angled screen.

26. Method as in claim 25,
**characterised in that**
the fabric used is an interlay, a woven fabric or a non-woven fabric.

27. Fibre composite material manufactured from at least one non-woven fibre mat in accordance with claim 1,
**characterised in that**
it contains between 30 and 90 per cent by weight of a reinforcing fibre selected from high-performance materials with a fibre length of between 0.1 mm and 30 mm, and **in that** the reinforcing fibre is oriented anisotropically in the matrix of the high-performance material, the fibre composite material having a density of between 0.25 g/cm³ and 6 g/cm³.

28. Fibre composite material as in claim 27,
**characterised in that**
the reinforcing fibre is selected from glass fibres, aramide fibres, carbon fibres, ceramic fibres or mixtures thereof.

29. Fibre composite material as in claim 27 or 28,
**characterised in that**
the matrix consists of a high-performance thermoplastic selected from polyetherether ketone, poly-p-phenylene sulphide, polyether imide and / or polyether sulphone.

30. Fibre composite material as in claim 27,
**characterised in that**
the density of the fibre composite material is between 30 and 100 % of the maximum density achievable, calculated from the densities of the matrix material and the reinforcing fibre.

31. Fibre composite material as in one of claims 27 to 30,
**characterised in that**
the fibre composite material has a functional layer on at least one side of the material.

32. Fibre composite material as in one of claims 27 to 31,
**characterised in that**
it has a thickness of between 0.01 mm and 1.6 mm.

33. Fibre composite material as in one of claims 27 to 32,
which is manufactured by pressing, in a heated tool, at least two non-woven fibre mats made in accordance with one of claims 1 to 20.

34. Fibre composite material as in claim 33,
**characterised in that**
the pressing process is produced at a pressure of between 0.05 and 15 N/mm².

## Revendications

1. Natte en fibres non tissées en tant que produit semi-fini contenant au moins une première fibre formée d'un thermoplastique de haute qualité sous la forme d'une fibre fondue ayant une longueur de fibre de 0,1 à 30 mm et une fraction pondérale de 30 à 90% et au moins une deuxième fibre de renforcement formée d'un matériau de haute qualité ayant une longueur de fibre de 0, 1 à 30 mm, dont la stabilité à la température est supérieure à celle de la fibre fondue, avec une fraction pondérale de 10 à 70%, dans laquelle la fibre fondue et la au moins une fibre de renforcement ne sont liées qu'aux points de croisement ou aux points de contact avec 1 à 10 pour-cent en poids d'un liant, et dans laquelle les fractions pondérales se rapportent à l'ensemble de la formulation de la natte de fibres non tissées à condition que la longueur des fibres fondues soit inférieure à celle des fibres de renforcement et que la natte de fibres non tissées présente un grammage de 8 à 400 g/m².

2. Natte de fibres non tissées selon la revendication 1, **caractérisée en ce que** la longueur des fibres fondues est de 2 mm à 6 mm.

3. Natte de fibres non tissées selon la revendication 2, **caractérisée en ce que** la longueur des fibres fondues est de 2,5 mm à 3,5 mm.

4. Natte de fibres non tissées selon la revendication 1, **caractérisée en ce que** la longueur des fibres de renforcement est de 6 mm à 18 mm.

5. Natte de fibres non tissées selon la revendication 1, **caractérisée en ce que** la longueur des fibres de renforcement est de 6 mm à 12 mm.

6. Natte de fibres non tissées selon l'une quelconque des revendications 1 à 5, **caractérisée en ce que** la fibre fondue est choisie parmi une polyétheréthercétone, un poly(sulfure de p-phénylène), un polyétherimide et/ou une polyéthersulfone et/ou leurs mélanges.

7. Natte de fibres non tissées selon l'une quelconque des revendications 1 à 6, **caractérisée en ce que** la fibre de renforcement est choisie parmi les fibres de verre, les fibres d'aramide, les fibres de carbone, les fibres de céramique, les fibres métalliques, les fibres de polyimides, les fibres de polybenzoxazoles et les fibres naturelles et/ou leurs mélanges.

8. Natte de fibres non tissées selon l'une quelconque des revendications 1 à 7, **caractérisée en ce que** le liant est choisi parmi les composés qui sont formés à partir de polyacrylate, de poly(acétate de vinyle), d'alcool polyvinylique, de polyuréthanne, de résines, de polyoléfines, de polyamides aromatiques ou leurs copolymères ou leurs mélanges.

9. Natte de fibres non tissées selon la revendication 8, **caractérisée en ce que** le liant est choisi parmi les fibrilles, les fibrides et/ou les liants fibreux et **en ce que** la géométrie en matière de rapport longueur-largeur-hauteur varie pour chaque paramètre individuel par rapport à un autre dans la plage de 1:1 à 1:100.000.

10. Natte de fibres non tissées selon l'une quelconque des revendications 1 à 9, **caractérisée en ce qu'**elle contient en plus des additifs.

11. Natte de fibres non tissées selon la revendication 10, **caractérisée en ce que** les additifs sont choisis parmi des additifs tribologiques, des additifs formés de fibres, de fibrilles, de fibrides, de pâtes, de poudres métalliques ou céramiques ou de poudres organiques et/ou de leurs mélanges.

12. Natte de fibres non tissées selon la revendication 11, **caractérisée en ce que** l'on choisit comme additifs des fibres ou des poudres de PTFE, des fibres de PI, des fibres d'aramide, des fibres ou des poudres de carbone et/ou des poudres métalliques.

13. Natte de fibres non tissées selon au moins l'une quelconque des revendications 1 à 12, **caractérisée en ce que** la natte de fibres non tissées présente une masse volumique de 30 à 500 kg/m3.

14. Natte de fibres non tissées selon l'une quelconque des revendications 1 à 13, **caractérisée en ce qu'**elle présente une épaisseur de 0,1 mm à 4 mm.

15. Natte de fibres non tissées au moins selon l'une quelconque des revendications 1 à 14, **caractérisée en ce que** l'on applique un substrat plat sur au moins une face externe de la natte de fibres non tissées.

16. Natte de fibres non tissées selon la revendication 15, **caractérisée en ce que** l'on applique un objet en forme de bande sous la forme d'un textile tissé, d'un textile posé, d'un papier ou d'un non-tissé.

17. Natte de fibres non tissées selon au moins l'une quelconque des revendications 1 à 16, **caractérisée en ce qu'**il s'agit d'un matériau composite d'au moins deux nattes de fibres non tissées.

18. Natte de fibres non tissées selon l'une quelconque des revendications 1 à 17, **caractérisée en ce que** la fibre fondue et la fibre de renforcement se présentent en distribution homogène dans la natte.

19. Natte de fibres non tissées au moins selon l'une quelconque des revendications 1 à 17, **caractérisée en ce que** les fibres fondues et les fibres de renforcement se présentent en distribution non homogène dans la natte.

20. Procédé de fabrication d'une natte de fibres non tissées selon l'une quelconque des revendications 1 à 19, **caractérisé en ce que** les fibres fondues et les fibres de renforcement sont dispersées dans un agent dispersant, de préférence de l'eau, **en ce qu'**il se forme ensuite par filtration un voile en continu sur une bande tamis circulant en oblique et **en ce que** l'on effectue ensuite une consolidation et un séchage de la bande de voile, le liant étant ajouté pendant l'étape de dispersion et/ou pendant la formation du voile.

21. Procédé selon la revendication 20, **caractérisé en ce que** le liant est ajouté sous la forme de fibres dans une dispersion.

22. Procédé selon au moins l'une quelconque des revendications 20 ou 21, **caractérisé en ce que** l'on incorpore les additifs sous la forme de fibres ou de poudres.

23. Procédé selon la revendication 22, **caractérisé en ce que** l'on incorpore ou que l'on distribue les additifs pendant l'étape de dispersion et/ou pendant la formation du voile.

24. Procédé selon au moins l'une quelconque des revendications 20 à 23, **caractérisé en ce que** le grammage et l'épaisseur du voile sont induits par la composition matérielle de la dispersion et/ou par la vitesse d'acheminement de la dispersion sur le tamis oblique et/ou par sa vitesse de transport.

25. Procédé selon au moins l'une quelconque des revendications 20 à 24, **caractérisé en ce que** la formation du voile s'effectue avec le produit plat appliqué sur le tamis oblique.

26. Procédé selon la revendication 25, **caractérisé en ce que** l'on utilise comme article plan un textile posé, un textile tissé ou un non tissé.

27. Matériau de fibres composites, fabriqué à partir d'au moins une natte de fibres non tissées selon la revendication 1, **caractérisé en ce qu'**il contient 30 à 90% en poids d'une fibre de renforcement choisie parmi des matériaux de haute qualité ayant une longueur de fibre de 0,1 mm à 30 mm et **en ce que** la fibre de renforcement est alignée de manière anisotrope dans la matrice du matériau de haute qualité, le matériau de fibres composites présentant une masse volumique de 0,25 g/cm³ à 6.g/cm³.

28. Matériau de fibres composites selon la revendication 27, **caractérisé en ce que** l'on choisit la fibre de renforcement parmi les fibres de verre, les fibres d'aramide, les fibres de carbone, les fibres de céramique ou leurs mélanges.

29. Matériau de fibres composites selon la revendication 27 ou 28, **caractérisé en ce que** la matrice est formée d'un thermoplastique de haute qualité, choisi parmi une polyétheréthercétone, un poly(sulfure de p-phénylène), un polyétherimide et/ou une polyéthersulfone.

30. Matériau de fibres composites selon la revendication 27, **caractérisé en ce que** la masse volumique du matériau de fibres composites est de 30 à 100% de la masse volumique maximale que l'on peut atteindre et que l'on calcule à partir des masses volumiques du matériau de matrice et de la fibre de renforcement.

31. Matériau de fibres composites selon l'une quelconque des revendications 27 à 30, **caractérisé en ce que** le matériau de fibres composites présente une couche fonctionnelle sur au moins une face du matériau.

32. Matériau de fibres composites selon l'une quelconque des revendications 27 à 31, **caractérisé en ce qu'**il présente une épaisseur de 0,01 mm à 1,6 mm.

33. Matériau de fibres composites selon l'une quelconque des revendications 27 à 32, qui peut être fabriqué par compression d'au moins deux nattes de fibres non tissées selon l'une quelconque des revendications 1 à 20 dans un outil chauffé.

34. Matériau de fibres composites selon la revendication 33, **caractérisé en ce que** la compression est produite à une pression de 0,05 à 15 N/mm².
